(19) Europäisches Patentamt / European Patent Office / Office européen des brevets

(11) **EP 1 598 719 B1**

(12) **FASCICULE DE BREVET EUROPEEN**

(45) Date de publication et mention
de la délivrance du brevet:
**27.06.2012 Bulletin 2012/26**

(51) Int Cl.:
***G05D 1/02*** *(2006.01)*

(21) Numéro de dépôt: **05290701.1**

(22) Date de dépôt: **30.03.2005**

(54) **Procédé et dispositif pour déterminer automatiquement une trajectoire de capture d'une trajectoire de vol pour un aéronef, ainsi que méthode et système de guidage automatique d'un aéronef**

Verfahren und Einrichtung zur automatischen Bestimmung der Einfangbahn einer Flugbahn für ein Flugzeug, sowie automatisches Steuerverfahren und -System eines Flugzeugs

Process and device for automatically determining a recapture route from a flight path for an aircraft, so as system and method for automatically guiding an aircraft

(84) Etats contractants désignés:
**AT BE BG CH CY CZ DE DK EE ES FI FR GB GR HU IE IS IT LI LT LU MC NL PL PT RO SE SI SK TR**

(30) Priorité: **18.05.2004 FR 0405374**

(43) Date de publication de la demande:
**23.11.2005 Bulletin 2005/47**

(73) Titulaire: **AIRBUS OPERATIONS (SAS)**
**31060 Toulouse (FR)**

(72) Inventeur: **Artini, Franck**
**31000 Toulouse (FR)**

(74) Mandataire: **Hauer, Bernard**
**Gevers France**
**23bis, rue de Turin**
**75008 Paris (FR)**

(56) Documents cités:
**FR-A- 2 749 650     FR-A- 2 787 895**
**FR-A- 2 803 655     US-A1- 2002 193 915**

## Description

La présente invention concerne un procédé et un dispositif pour déterminer automatiquement une trajectoire de capture d'une trajectoire de vol pour un aéronef, ainsi qu'une méthode et un système de guidage automatique de l'aéronef utilisant respectivement un tel procédé et un tel dispositif.

Bien que non exclusivement, la présente invention s'applique plus particulièrement à un avion de transport militaire qui est généralement très lourd, et dont les temps de manoeuvre sont en général relativement lents.

Lorsqu'un aéronef comporte une trajectoire de vol planifiée (qui a été planifiée de façon usuelle en préparation d'une mission), un mode de guidage automatique consistant à faire suivre à l'aéronef cette trajectoire de vol planifiée, en particulier un mode de navigation consistant plus précisément à faire suivre latéralement à l'aéronef une trajectoire latérale de ladite trajectoire de vol planifiée, ne peut pas être engagé dans un mode managé, tant que l'aéronef ne se trouve pas sur ladite trajectoire de vol planifiée.

Aussi, lorsqu'un pilote arme un tel mode de guidage automatique, en particulier le mode de navigation précité, il doit d'abord guider l'aéronef manuellement ou selon un mode sélecté (c'est-à-dire en ajustant manuellement des paramètres particuliers qui sont commandés sur l'aéronef) pour lui permettre de rejoindre ladite trajectoire de vol planifiée, avant que ledit mode de guidage automatique ne soit engagé, ce qui nécessite bien entendu une charge de travail importante du pilote et entraîne un retard dans l'engagement du guidage automatique.

On notera que le fait de s'écarter d'une trajectoire de vol planifiée est relativement fréquent lors d'un vol à basse altitude réalisé dans le domaine maine militaire, par exemple par un avion de transport militaire, et dépend généralement des conditions opérationnelles rencontrées et notamment de la recherche au cours du vol d'un masquage par le terrain le plus efficace possible.

Par le document FR-A-2 787 895, on connaît un procédé pour déterminer automatiquement une trajectoire de capture d'une trajectoire de vol pour un aéronef. Cette trajectoire de vol comporte au moins une trajectoire latérale comprenant successivement une phase initiale représentant une rotation en arc de cercle, une phase de transition comportant éventuellement un segment rectiligne et une phase terminale de capture, représentant une rotation. Cette trajectoire de capture est une trajectoire de capture latérale qui est formée de manière à permettre à l'aéronef de rejoindre latéralement un tronçon rectiligne particulier de la trajectoire latérale de ladite trajectoire de vol, et dont :

- la phase initiale débute à la position actuelle de l'aéronef et présente un sens de rotation qui permet de minimiser la durée de la phase de capture ;
- la phase de transition comporte un segment rectiligne présentant un angle de capture par rapport audit tronçon rectiligne particulier ; et
- la phase terminale de capture représente une rotation permettant à l'aéronef de rejoindre ledit tronçon rectiligne particulier avec un route prédéterminée.

La présente invention a pour objet de remédier aux inconvénients précités. Elle concerne un procédé pour déterminer automatiquement une trajectoire de capture d'une trajectoire de vol pour un aéronef, ladite trajectoire de vol comportant au moins une trajectoire latérale munie au moins d'une pluralité de tronçons rectilignes.

A cet effet, ledit procédé est remarquable, selon l'invention, en ce que ladite trajectoire de capture est une trajectoire de capture latérale qui est formée de manière à permettre à l'aéronef de rejoindre latéralement un tronçon rectiligne particulier (de la trajectoire latérale de ladite trajectoire de vol), et qui comporte, successivement :

- une phase initiale représentant une rotation en arc de cercle et débutant à la position actuelle de l'aéronef ;
- une phase de transition comportant, si des premières conditions sont vérifiées, un segment rectiligne présentant un angle de capture par rapport audit tronçon rectiligne particulier ; et
- une phase terminale de capture représentant une rotation permettant à l'aéronef de rejoindre ledit tronçon rectiligne particulier avec une route prédéterminée.

De plus, selon l'invention, ladite trajectoire de capture est définie de manière à permettre une durée de capture minimale, c'est-à-dire une durée de vol minimale pour rejoindre latéralement la trajectoire de vol, en particulier une trajectoire de vol planifiée en préparation de mission.

Grâce à l'invention, les rotations mises en oeuvre lors des phases initiale et terminale présentent donc également une durée minimale, ce qui est bien entendu avantageux pour le confort de l'équipage et des passagers.

De façon avantageuse, on détermine le rayon de l'arc de cercle formant ladite phase initiale, à partir d'un facteur de charge maximal admissible et d'une vitesse de consigne de l'aéronef.

En outre, avantageusement, on détermine comme sens de rotation de la phase initiale, le sens qui permet de minimiser la durée de la phase de capture (c'est-à-dire de la phase pour rejoindre ladite trajectoire latérale).

Dans un mode de réalisation préféré, ledit sens de rotation dépend :

- d'une distance $d$ représentant la distance maximale lors de la phase initiale par rapport audit tronçon rectiligne particulier ;

- du rayon R de l'arc de cercle formant ladite phase initiale ;
- d'une erreur de route TKAE entre la route actuelle de l'aéronef et celle permettant de suivre ledit tronçon rectiligne particulier ; et
- du côté, par rapport à la trajectoire latérale de la trajectoire de vol, duquel vole l'aéronef, en regardant dans le sens de vol défini pour suivre ladite trajectoire latérale.

Dans ce cas, de façon avantageuse, ledit sens de rotation correspond :

A/ lorsque $d \geq 2R$ :

a) lorsque l'aéronef vole du côté droit :

1) TKAE $\in$ ] -180° ; -(180° - $\alpha$) [, à une rotation vers la droite ;
2) TKAE $\in$ [ -(180° - $\alpha$) ; $\alpha$ [, à une rotation vers la gauche ;
3) TKAE = $\alpha$, à aucune rotation ; et
4) TKAE $\in$ ] $\alpha$ ; 180° ], à une rotation vers la droite ;
$\alpha$ représentant ledit angle de capture ;

b) lorsque l'aéronef vole du côté gauche :

1 )TKAE $\in$ ] -180° ; -$\alpha$ [, à une rotation vers la gauche ;
2) TKAE = -$\alpha$, à aucune rotation ;
3) TKAE $\in$ ] -$\alpha$ ; 180° - $\alpha$ ], à une rotation vers la droite ; et
4) TKAE $\in$ [ 180° -$\alpha$ ; 180°], à une rotation vers la gauche ;

B/ lorsque dmin $\leq$ d < 2R, avec dmin = 2Rcos$\alpha$ :

a) lorsque l'aéronef vole du côté droit :

1) TKAE $\in$ ] -180° ; -(180° - ($\alpha$-$\beta$)) ], à une rotation vers la droite ;
2) TKAE $\in$ ] -(180° - ($\alpha$-$\beta$)) ; 0°], à une rotation vers la gauche ;
3) TKAE $\in$ [0° ; 180° - ($\alpha$-$\beta$)], à une rotation vers la gauche ;
4) TKAE $\in$ ] 180° - ($\alpha$-$\beta$) ; 180° ], à une rotation vers la droite ; et
5) TKAE = -($\alpha$-$\beta$), à aucune rotation ;
$\beta$ représentant un angle particulier précisé ci-dessous ;

b) lorsque l'aéronef vole du côté gauche :

1) TKAE $\in$ ] -180° ; -($\alpha$-$\beta$) [, à une rotation vers la gauche ;
2) TKAE = -($\alpha$-$\beta$), à aucune rotation ;
3) TKAE $\in$ ] -($\alpha$-$\beta$) ; 0° ], à une rotation vers la droite ;
4) TKAE $\in$ [0° ; 180° -($\alpha$-$\beta$)], à une rotation vers la droite ; et
5) TKAE $\in$ ] 180° -($\alpha$-$\beta$) ; 180° ], à une rotation vers la gauche ;

C/ lorsque d < dmin et l'aéronef vole du côté droit ou du côté gauche :

1) TKAE $\in$ [ 0° ; 180° ], à une rotation vers la droite ; et
2) TKAE $\in$ ] -180° ; 0° ], à une rotation vers la gauche.

Par ailleurs, avantageusement, ledit angle de capture présente une valeur prédéterminée, qui est modifiable par un opérateur. On sait que le confort de la capture augmente (mais son efficacité baisse), lorsque la valeur de l'angle de capture diminue. L'opérateur doit donc trouver un compromis entre confort et efficacité, qui est en particulier adapté à la mission à réaliser.

En outre, avantageusement, lesdites premières conditions sont vérifiées de sorte que ladite phase de transition comporte alors un segment rectiligne, lorsque la distance d (représentant la distance maximale lors de la phase initiale par rapport audit tronçon rectiligne particulier), vérifie l'une des relations suivantes :

a) d $\geq$ 2R, R étant le rayon de l'arc de cercle formant ladite phase initiale ;
b) d $\leq$ dmin, avec dmin = 2Rcos$\alpha$, $\alpha$ représentant ledit angle de capture.

En outre, avantageusement, si lesdites premières conditions ne sont pas vérifiées, ladite phase de transition correspond simplement à un point de jonction desdites phases initiale et terminale.

Par ailleurs, ladite route prédéterminée utilisée pour déterminer ladite phase terminale de capture correspond à la route permettant de suivre ledit tronçon rectiligne particulier de la trajectoire latérale.

En outre, avantageusement, la phase terminale de capture représente une rotation en arc de cercle, dont le rayon est déterminé à partir d'un facteur de charge maximal admissible et d'une vitesse de consigne de l'aéronef, comme le rayon de l'arc de cercle formant la phase initiale.

La présente invention concerne également un dispositif pour déterminer automatiquement une trajectoire de capture d'une trajectoire de vol pour un aéronef, ladite trajectoire de vol comportant au moins une trajectoire latérale munie au moins d'une pluralité de tronçons rectilignes.

Selon l'invention, ledit dispositif est remarquable en ce qu'il comporte des moyens pour former ladite trajectoire de capture de manière à obtenir une trajectoire qui permet à l'aéronef de rejoindre latéralement un tronçon rectiligne particulier de ladite trajectoire de vol, et qui comporte, successivement :

- une phase initiale représentant une rotation en arc de cercle et débutant à la position actuelle de l'aéronef ;
- une phase de transition comportant, si les premières conditions précitées sont vérifiées, un segment rectiligne présentant un angle de capture par rapport audit tronçon rectiligne particulier ; et
- une phase terminale de capture représentant une rotation permettant à l'aéronef de rejoindre ledit tronçon rectiligne particulier avec une route prédéterminée.

La présente invention concerne également une méthode de guidage d'un aéronef qui comporte une trajectoire de vol planifiée comprenant au moins une trajectoire latérale munie au moins d'une pluralité de tronçons rectilignes.

Selon l'invention, ladite méthode de guidage est remarquable en ce que :

a) au cours d'un vol de l'aéronef, lorsque l'aéronef n'est pas guidé le long de ladite trajectoire de vol planifiée, en permanence :

a1) on met en oeuvre un procédé tel que celui précité, pour déterminer automatiquement une trajectoire de capture permettant à l'aéronef de rejoindre latéralement un tronçon rectiligne particulier de la trajectoire latérale de ladite trajectoire de vol planifiée ; et
a2) on présente ladite trajectoire de capture à un pilote de l'aéronef ; et

b) lorsqu'un pilote de l'aéronef arme un mode de navigation destiné à guider de façon automatique l'aéronef latéralement le long de ladite trajectoire de vol planifiée :

b1) si l'aéronef ne se trouve pas sur ladite trajectoire de vol planifiée, on guide de façon automatique l'aéronef latéralement le long de ladite trajectoire de capture pour capturer ladite trajectoire de vol planifiée ; et
b2) dès que l'aéronef se trouve sur ladite trajectoire de vol planifiée, on le guide de façon automatique à l'aide dudit mode de navigation latéralement le long de ladite trajectoire de vol planifiée.

Dans un mode de réalisation particulier, à l'étape b1), l'aéronef ne se trouve pas sur ladite trajectoire de vol planifiée, lorsque la distance latérale entre la position actuelle de l'aéronef et la trajectoire latérale de la trajectoire de vol, est supérieure à une distance prédéterminée (relative à l'engagement du mode de navigation).

La présente invention concerne par ailleurs un système de guidage d'un aéronef, comportant un moyen de guidage susceptible de mettre en oeuvre un mode de navigation usuel destiné à guider de façon automatique l'aéronef latéralement le long d'une trajectoire de vol planifiée.

Ce système de guidage est remarquable, selon l'invention :

- en ce qu'il comporte de plus :

. un dispositif tel que celui précité, pour déterminer automatiquement une trajectoire de capture permettant le cas échéant à l'aéronef de rejoindre latéralement un tronçon rectiligne particulier de la trajectoire latérale de ladite trajectoire de vol planifiée ; et
. des moyens pour présenter ladite trajectoire de capture à un pilote de l'aéronef ; et

- en ce que ledit moyen de guidage est formé de manière à guider de façon automatique l'aéronef, dès qu'il est armé :

. latéralement le long de ladite trajectoire de capture pour capturer ladite trajectoire de vol planifiée, si l'aéronef ne se trouve pas sur ladite trajectoire de vol planifiée ; et
. latéralement le long de ladite trajectoire de vol planifiée à l'aide dudit mode de navigation, dès que l'aéronef se trouve sur ladite trajectoire de vol planifiée.

Ainsi, grâce à l'invention, un mode de navigation automatique est engagé immédiatement dès que le pilote le demande (en armant ce mode de navigation) de manière à, si nécessaire, capturer et à suivre latéralement la trajectoire de vol planifiée. Cet engagement est donc immédiat, même si l'aéronef ne vole pas le long de (ou vers) ladite trajectoire de vol planifiée, et ceci quelles que soient la position et la trajectoire dudit aéronef.

Les figures du dessin annexé feront bien comprendre comment l'invention peut être réalisée. Sur ces figures, des références identiques désignent des éléments semblables.

La figure 1 est le schéma synoptique d'un système de guidage selon l'invention, comportant notamment un dispositif conforme à l'invention.

Les figures 2 et 3 illustrent deux types de capture d'une trajectoire de vol.

Les figures 4 à 11 sont des graphiques qui permettent de bien expliquer les caractéristiques essentielles de la présente invention.

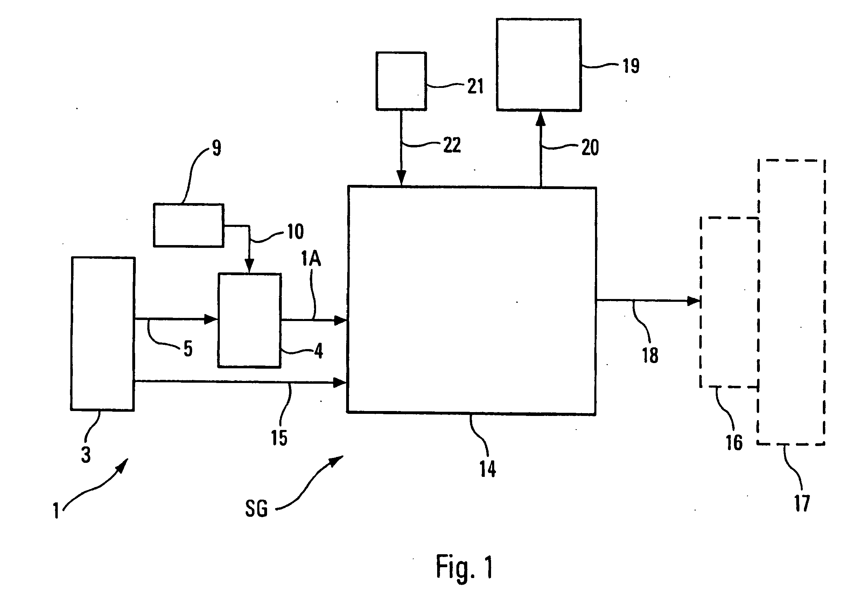

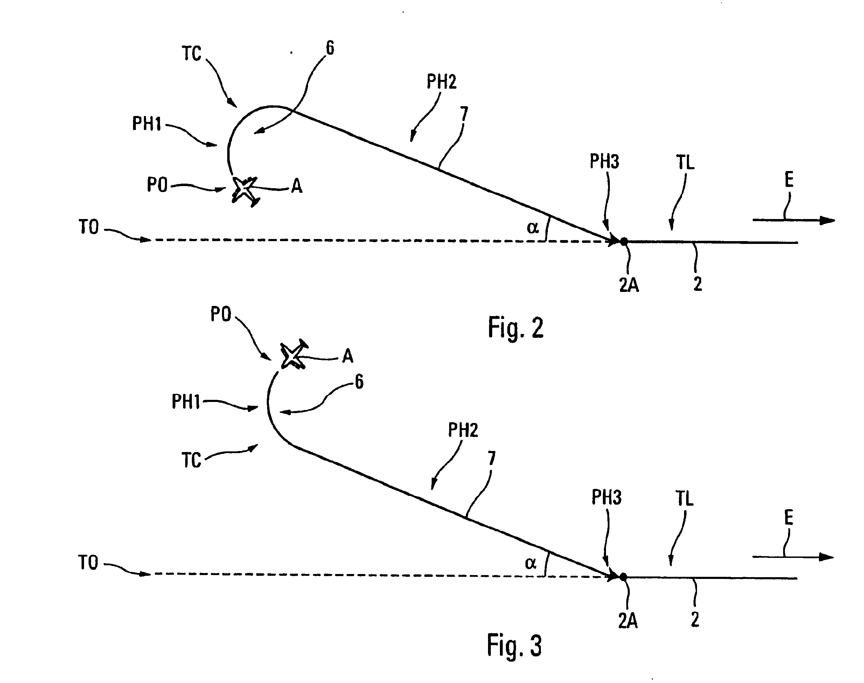

Le dispositif 1 conforme à l'invention et représenté schématiquement sur la figure 1, est destiné à déterminer automatiquement une trajectoire de capture TC permettant à un aéronef A, en particulier un avion de transport militaire, de capturer une trajectoire de vol TO, comme représenté sur les figures 2 et 3, ladite trajectoire de vol TO comportant au moins une trajectoire latérale TL munie d'au moins une pluralité de tronçons rectilignes 2.

Dans un mode de réalisation particulier, ladite trajectoire de vol TO est une trajectoire dite "à la ficelle" qui est constituée de tronçons rectilignes 2, dont les transitions latérale et verticale sont des arcs de cercle à rayon constant qui sont issues de considérations de vitesse de consigne et de facteurs de charge maximaux admissibles. Les transitions latérales se trouvent au niveau de points de route qui sont généralement issus d'un plan de vol. Cette trajectoire de vol TO est une trajectoire anticipée, déterminée à l'aide de performances de montée et de descente prédites de l'aéronef A et comporte donc une trajectoire latérale TL dans le plan horizontal et une trajectoire verticale TV (ou profil de vol) dans le plan vertical.

Dans un mode de réalisation préféré mais non limitatif, ladite trajectoire de vol TO est une trajectoire à basse altitude qui permet à l'aéronef A de suivre au plus près le terrain survolé, notamment pour éviter de se faire repérer. Cette trajectoire de vol TO est calculée par des moyens de calcul usuels, à l'aide d'une base de données numériques du terrain ou d'une cartographie radar, et épouse, au mieux et au plus près, la configuration du terrain survolé.

Pour ce faire, ledit dispositif 1 peut comporter un ensemble 3 de sources d'informations, qui comporte notamment les moyens de calcul usuels précités, pour déterminer la trajectoire de vol TO.

Selon l'invention, ledit dispositif 1 comporte, de plus, des moyens 4 qui sont reliés par une liaison 5 audit ensemble 3, pour former ladite trajectoire de capture TC qui doit permettre de rejoindre (c'est-à-dire de capturer) latéralement un tronçon rectiligne particulier 2 de la trajectoire latérale TL de ladite trajectoire de vol TO, reçue dudit ensemble 3 de sources d'informations.

En outre, selon l'invention, lesdits moyens 4 déterminent une trajectoire de capture TC qui est définie de sorte qu'une durée de capture minimale soit nécessaire à l'aéronef A et qui comporte, successivement, comme représenté par exemple sur les figures 2 et 3 :

- une phase initiale PH1 représentant une rotation en arc de cercle 6 et débutant à la position actuelle PO de l'aéronef A ;
- une phase de transition PH2 comportant, si des conditions particulières précisées ci-dessous sont vérifiées, un segment rectiligne 7 présentant un angle de capture $\alpha$ par rapport audit tronçon rectiligne particulier 2 à rejoindre ; et
- une phase terminale de capture PH3 représentant une rotation permettant à l'aéronef A de rejoindre (en un point 2A) ledit tronçon rectiligne particulier 2 avec une route prédéterminée, à savoir la route TRK2 permettant de suivre ledit tronçon rectiligne particulier 2 de la trajectoire latérale TL dans le sens de vol E, tel que défini à partir du plan de vol.

Ladite trajectoire de capture TC permet donc à l'aéronef A de rejoindre latéralement la trajectoire latérale TL de la trajectoire de vol TO qui est, en particulier, une trajectoire de vol planifiée en préparation de mission.

De plus, grâce à l'invention, les rotations mises en oeuvre lors des phases initiale et terminale PH1 et PH3, qui sont des manoeuvres complexes, difficiles à mettre en oeuvre et généralement inconfortables, présentent une durée minimale, ce qui permet de limiter la réduction du confort de l'équipage et des passagers et de revenir rapidement à un vol moins perturbant.

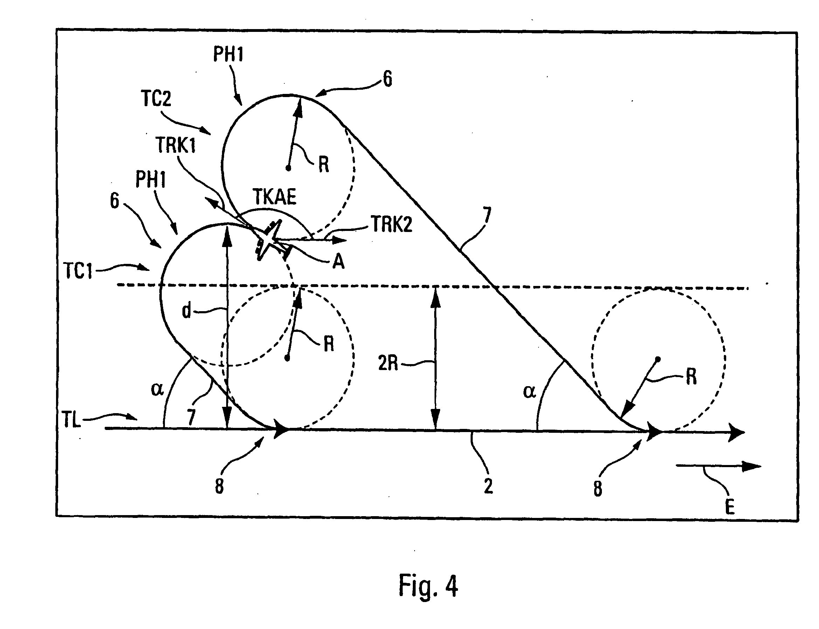

Lesdits moyens 4 déterminent le rayon R de l'arc de cercle 6 formant ladite phase initiale PH1, à partir d'un facteur de charge maximal admissible et d'une vitesse de consigne de l'aéronef A. Il en est de même pour le rayon R de l'arc de cercle 8 formant la phase terminale de capture PH3 et représenté sur la figure 4.

En outre, l'angle de capture $\alpha$ entre le segment rectiligne 7 de la phase de transition PH2 et le tronçon rectiligne particulier 2 à rejoindre, qui fait partie du domaine ]0° ; 90°[, peut être ajusté durant la préparation de la mission par un membre d'équipage de l'aéronef A, à l'aide d'un moyen d'entrée 9 qui est relié par une liaison 10 auxdits moyens 4. De préférence, ledit angle de capture $\alpha$ est initialisé avec une valeur par défaut, par exemple de 30°.

A partir de sa position (initiale) actuelle P0, l'aéronef A peut tourner vers la droite, comme représenté sur la figure 2, ou vers la gauche, comme représenté sur la figure 3, pour entamer la phase initiale PH1. Selon l'invention, lesdits moyens 4 déterminent, comme sens de rotation de cette phase initiale PH1, le sens (vers la droite, vers la gauche) qui permet de minimiser la durée de la phase de capture.

Plus précisément, ledit sens de rotation dépend :

- d'une distance d représentant la distance (orthogonale) maximale lors de la phase initiale PH1 par rapport audit segment rectiligne particulier 2, comme représenté pour la trajectoire de capture TC1 sur la figure 4. La distance $\underline{d}$ représente donc la valeur maximale d'une distance (orthogonale) XTK entre l'aéronef A et le segment rectiligne particulier 2. La figure 4 montre deux trajectoires de capture TC1 et TC2 comprenant respectivement des phases initiales PH1 de rotation vers la gauche et vers la droite.
- du rayon R de l'arc de cercle 6 formant ladite phase initiale PH1 ;
- d'une erreur de route TKAE entre la route actuelle TRK1 de l'aéronef A et la route TRK2 permettant à l'aéronef A de suivre ledit tronçon rectiligne 2 dans le sens de vol E ; et
- du côté (droit ou gauche), par rapport à la trajectoire latérale TL de la trajectoire de vol TO, duquel vole l'aéronef A, en regardant dans le sens de vol E défini par le plan de vol pour suivre ladite trajectoire latérale TL. Sur l'exemple de la figure 4, l'aéronef 4 vole donc du côté gauche.

Selon l'invention, ledit sens de rotation correspond :

A/ lorsque d ≥ 2R :

a) lorsque l'aéronef A vole du côté droit :

1) TKAE ∈ ] -180° ; -(180° - α) [, à une rotation vers la droite ;
2) TKAE ∈ [ -(180° - α) ; α [, à une rotation vers la gauche ;
3) TKAE = α, à aucune rotation ; et
4) TKAE ∈ ] α ; 180° ], à une rotation vers la droite ;
α représentant ledit angle de capture ;

b) lorsque l'aéronef A vole du côté gauche :

1) TKAE ∈ ] -180° ; -α [, à une rotation vers la gauche ;
2) TKAE = -α, à aucune rotation ;
3) TKAE ∈ ] -α ; 180° - α ], à une rotation vers la droite ; et
4) TKAE ∈ [ 180° -α ; 180°], à une rotation vers la gauche ;

B/ lorsque dmin ≤ d < 2R, avec dmin = 2Rcosα :

a) lorsque l'aéronef A vole du côté droit :

1) TKAE ∈ ] -180° ; -(180° - (α-β)) ], à une rotation vers la droite ;
2) TKAE ∈ ] -(180° - (α-β)) ; 0°], à une rotation vers la gauche ;
3) TKAE ∈ [0° ; 180° - (α-β)], à une rotation vers la gauche ;
4) TKAE ∈ ] 180° - (α-β) ; 180° ], à une rotation vers la droite ; et
5) TKAE = -(α-β), à aucune rotation ;
β représentant un angle particulier, précisé ci-dessous ;

b) lorsque l'aéronef A vole du côté gauche :

1) TKAE ∈ ] -180° ; -(α-β) [, à une rotation vers la gauche ;
2) TKAE = -(α-β), à aucune rotation ;
3) TKAE ∈ ] -(α-β) ; 0° ], à une rotation vers la droite ;
4) TKAE ∈ [0° ; 180° -(α-β)], à une rotation vers la droite ; et
5) TKAE ∈ ] 180° -(α-β) ; 180° ], à une rotation vers la gauche ;

C/ lorsque d < dmin et l'aéronef A vole du côté droit ou du côté gauche :

1) TKAE ∈ [ 0° ; 180° ], à une rotation vers la droite ; et
2) TKAE ∈ ] -180° ; 0° ], à une rotation vers la gauche.

Par ailleurs, on notera que :

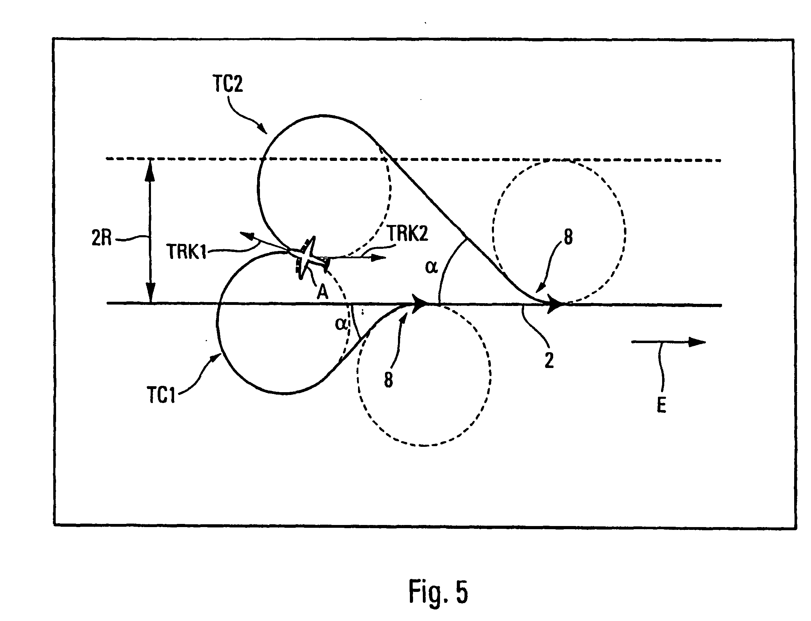

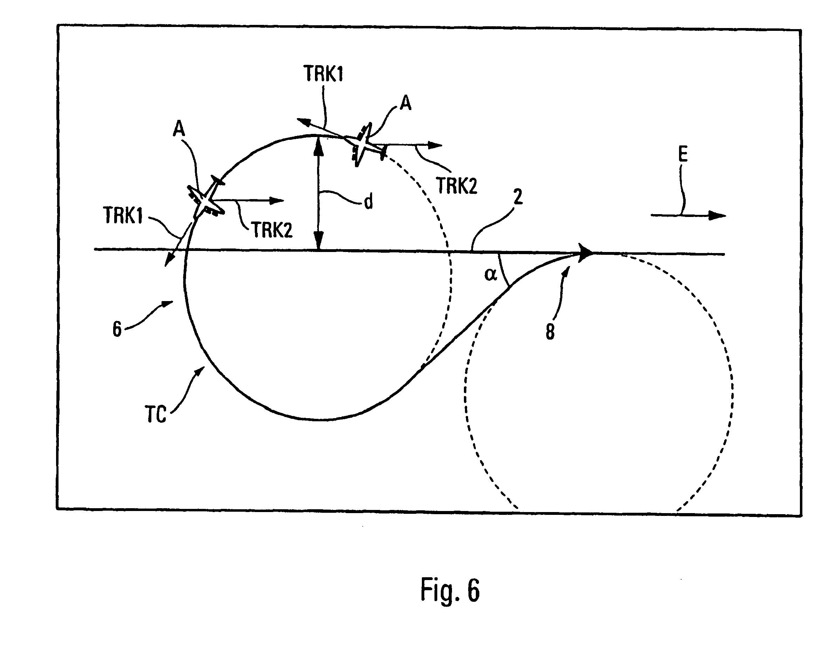

- si d > 2R, l'aéronef A reste sur le même côté du tronçon rectiligne 2 pendant toute la trajectoire de capture TC, et un segment rectiligne 7 peut être inséré entre la phase initiale PH1 et la phase terminale PH2 ;
- si d = 2R, la trajectoire de capture TC est réduite à un arc de cercle de rayon R ; et
- si 0 ≤ d < 2R (figure 5), alors une trajectoire de capture TC2 reste du même côté du tronçon rectiligne 2, alors que l'autre trajectoire de capture TC1 traverse ce tronçon rectiligne 2 et la capture dudit tronçon rectiligne 2 est alors réalisée par l'autre côté, comme également représenté sur la figure 6.

On notera en outre que la distance d̲ est reliée à l'erreur de route TKAE et à la distance XTK précitée, par la relation suivante :

$$ d = XTK + R(1 + cos\,TKAE), $$

et ceci quel que soit le signe de l'angle TKAE.

Pour simplifier, le sens de rotation de la phase initiale PH1 correspond :

A/ lorsque d ≥ 2R :

a) lorsque l'aéronef A vole du côté droit :

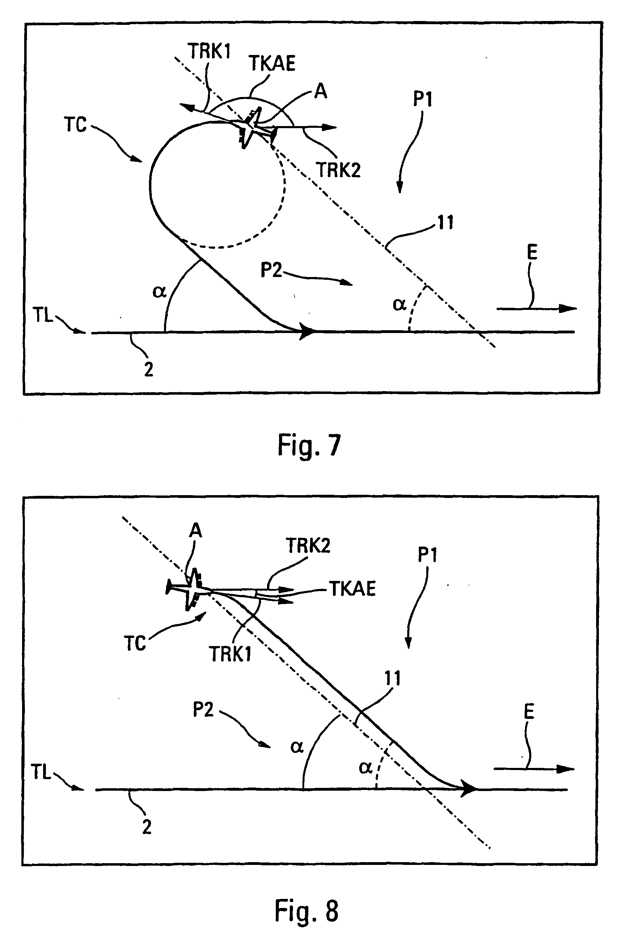

1) si TKAE est dans un demi-plan P1 (qui se trouve à l'avant d'une ligne de séparation 11 représentée sur les figures 7 et 8 et définie par un angle correspondant à α-TRK, TRK représentant la route), à une rotation vers la gauche ;
2) si TKAE est dans un demi-plan P2 (qui se trouve à l'arrière de ladite ligne de séparation 11), à une rotation vers la droite ;

b) lorsque l'aéronef A vole du côté gauche :

1) si TKAE est dans le demi-plan avant P1, à une rotation vers la droite (figure 8) ;
2) si TKAE est dans le demi-plan arrière P2, à une rotation vers la gauche (figure 7) ;

B/ lorsque dmin ≤ d < 2R :

a) lorsque l'aéronef A vole du côté droit :

    1) si TKAE est dans un demi-plan avant défini par $\alpha$-$\beta$-TRK, à une rotation vers la gauche ;
    2) si TKAE est dans un demi-plan arrière défini par $\alpha$-$\beta$-TRK, à une rotation initiale vers la droite ;

b) lorsque l'aéronef A vole du côté gauche :

    1) si TKAE est dans un demi-plan avant défini par $\alpha$-$\beta$-TRK, à une rotation vers la droite ;
    2) si TKAE est dans un demi-plan arrière défini par $\alpha$-$\beta$-TRK, à une rotation vers la gauche ;

C/ lorsque d < dmin et l'aéronef A vole du côté droit ou du côté gauche :

    1) si TKAE est dans un demi-plan gauche défini par la route désirée, à une rotation vers la droite ;
    2) si TKAE est dans un demi-plan droit défini par la route désirée, à une rotation vers la gauche.

Lors de la demande de capture engendrée par le pilote (qui correspond à l'armement du mode de guidage), l'important est donc de bien déterminer le sens du premier virage, ce qui fixe la durée de virage totale de la manoeuvre de capture. Plus précisément, on choisit, parmi les deux sens possibles, celui qui engendre la durée la plus faible.

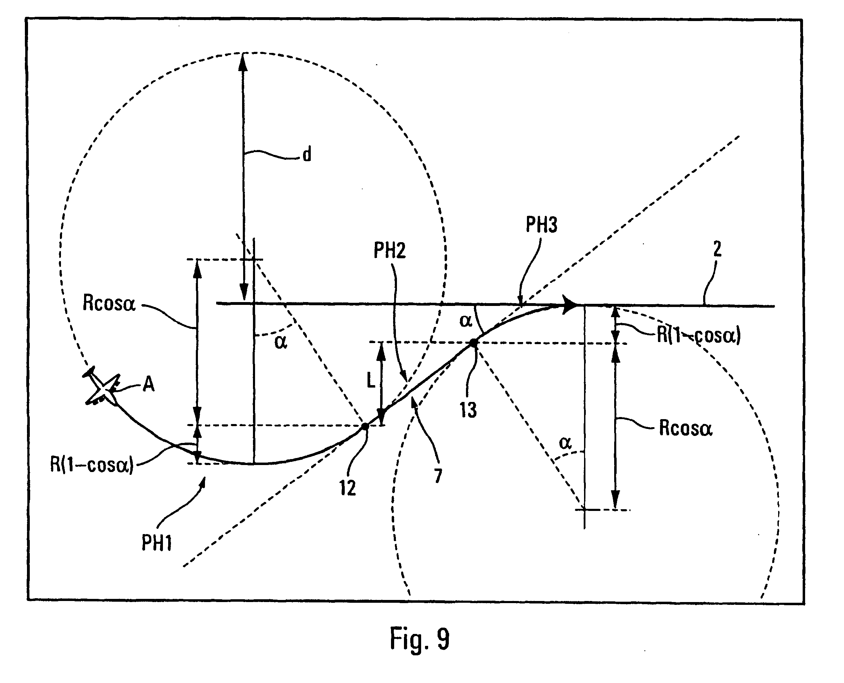

Sur la figure 9, on a représenté les différents paramètres utilisés pour la mise en oeuvre de la présente invention. Un segment rectiligne 7 peut être inséré entre la phase initiale PH1 et la phase terminale PH3, entre deux points 12 et 13 de jonction respectivement des phases PH1 et PH2 et des phases PH2 et PH3, si une longueur L est supérieure à 0.

Cette longueur L vérifie la relation :

$$\text{Lsin}\alpha = 2\text{Rcos}\alpha - d,$$

ce qui permet de définir le critère dmin = 2Rcos$\alpha$.

Ainsi, dans le cadre de la présente invention, les conditions particulières précitées sont vérifiées (de sorte que la phase de transition PH2 comporte un segment rectiligne 7), lorsque la distance $\underline{d}$ vérifie l'une des relations suivantes :

a) d $\geq$ 2R, R étant le rayon de l'arc de cercle 6 formant ladite phase initiale PH1 ;
b) d $\leq$ dmin.

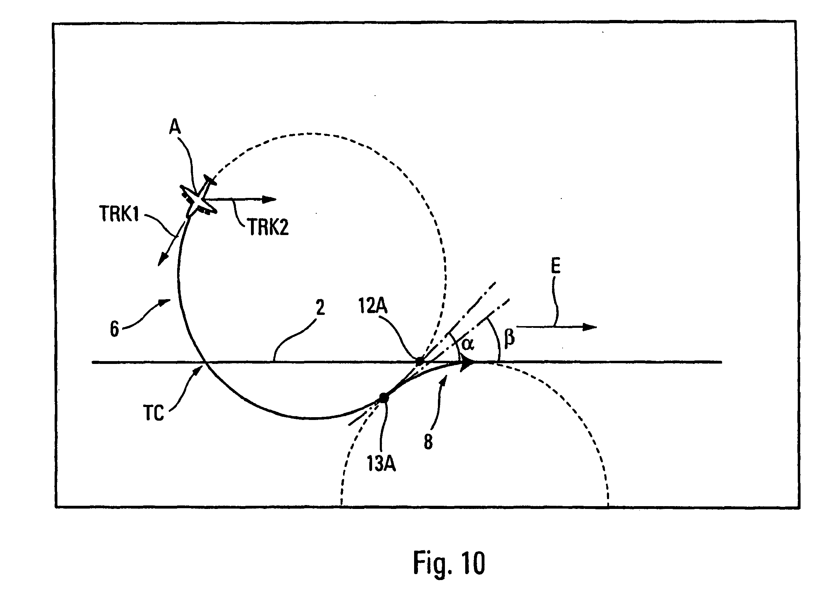

Si ces conditions particulières ne sont pas vérifiées, c'est-à-dire si dmin < d < 2R, aucun segment rectiligne n'est inséré entre les phases initiale PH1 et terminale PH3 et la phase de transition PH2 correspond à un simple point de jonction 13A desdites phases initiale et terminale PH1 et PH3, comme représenté sur la figure 10. Les points 12A et 13A de !a figure 10 correspondent aux points 12 et 13 de la figure 9. Cette figure 10 présente de plus l'angle $\beta$ qui correspond à l'angle du point d'inflexion de la tangente relative aux deux cercles (qui sont tangents en 13A).

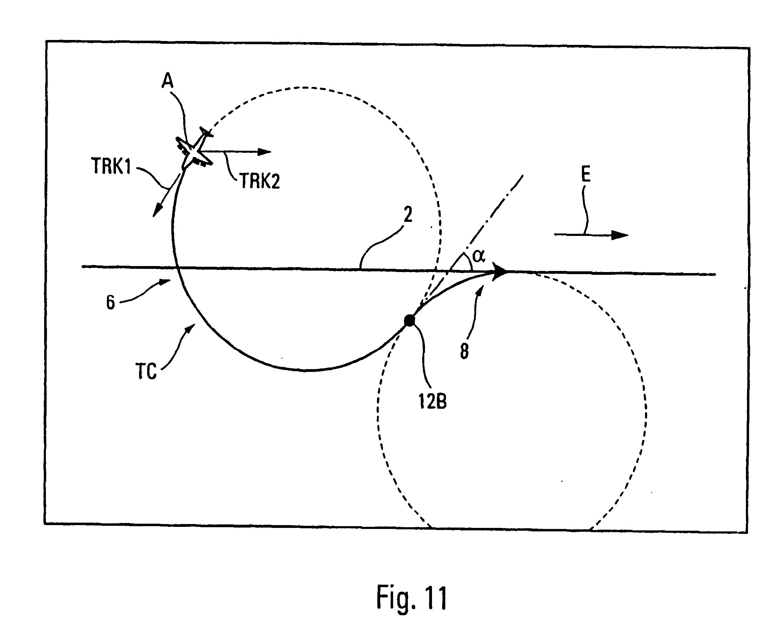

Lorsque d=dmin, les deux cercles sont tangents en un point 12B qui correspond simplement au regroupement des points 12 et 13 de la figure 9, comme cela est représenté sur la figure 11.

Dans une application préférée de la présente invention, le dispositif 1 pour déterminer automatiquement une trajectoire de capture TC de la trajectoire de vol TO est intégré dans un système de guidage automatique SG, comme représenté sur la figure 1.

De façon usuelle, ledit système de guidage SG qui est destiné à guider de façon automatique l'aéronef A latéralement le long d'une trajectoire de vol TO planifiée, comporte :

- un moyen de guidage usuel 14, par exemple un pilote automatique, qui reçoit des informations de l'ensemble 3 de sources d'informations par l'intermédiaire d'une liaison 15 et qui est destiné à déterminer des ordres de pilotage de l'aéronef A de sorte qu'il suive (au moins latéralement) ladite trajectoire de vol TO. Pour ce faire, ledit moyen de guidage 14 est susceptible de mettre en oeuvre un mode de navigation usuel, destiné à guider de façon automatique l'aéronef A latéralement le long de ladite trajectoire de vol TO planifiée ; et
- des moyens d'actionnement 16 d'organes commandés 17 tels que par exemple des gouvernes (de direction, de profondeur, ...) de l'aéronef A, moyens d'actionnement 16 qui sont reliés par une liaison 18 audit moyen de guidage 14 et auxquels on applique les ordres de pilotage déterminés par ce dernier, lesdits moyens d'actionnement 16 et lesdits organes de commande 17 étant représentés en traits interrompus sur la figure 1.

Selon l'invention, ledit système de guidage SG comporte de plus :

- ledit dispositif 1 qui est relié par une liaison 1 A audit moyen de guidage 14, pour déterminer automatiquement une trajectoire de capture TC permettant à l'aéronef A de rejoindre latéralement un tronçon rectiligne particulier 2 de la trajectoire latérale TL de la trajectoire de vol TO planifiée ; et
- des moyens usuels 19 qui sont par exemple reliés par l'intermédiaire d'une liaison 20 au moyen de guidage 14, pour présenter ladite trajectoire de capture TC à un pilote de l'aéronef A, par exemple sur un écran de visualisation non représenté.

De plus, ledit moyen de guidage 14 est formé de manière à guider l'aéronef A de façon automatique, dès qu'il est armé par un pilote à l'aide d'un moyen 21 usuel qui est, par exemple, relié par l'intermédiaire d'une liaison 22 audit moyen de guidage 14. Ce guidage automatique consiste :

- à guider l'aéronef A latéralement le long de ladite trajectoire de capture TC pour capturer ladite trajectoire de vol TO planifiée, si l'aéronef A ne se trouve pas sur ladite trajectoire de vol TO planifiée ; et
- à guider l'aéronef A latéralement le long de ladite trajectoire de vol TO planifiée à l'aide dudit mode de navigation précité, dès que ledit aéronef A se trouve sur ladite trajectoire de vol TO planifiée.

On notera que l'aéronef A ne se trouve pas sur ladite trajectoire de vol TO planifiée, lorsque la distance latérale entre la position actuelle PO de l'aéronef A et la trajectoire latérale TL de la trajectoire de vol TO, est supérieure à une distance prédéterminée.

Ainsi, grâce à l'invention, le mode de navigation (guidage latéral automatique) mis en oeuvre par le moyen de guidage 14 est engagé immédiatement dès que le pilote le demande (en armant ce mode de navigation à l'aide du moyen 21). Cet engagement est immédiat, même si l'aéronef A ne vole pas le long de la trajectoire de vol TO planifiée (dans ce cas, le dispositif 1 guide en effet tout d'abord l'aéronef A de façon automatique latéralement le long de la trajectoire de capture TC qui correspond à une trajectoire prédéterminée, ce qui permet l'engagement du mode de guidage), et ceci quelle que soit la position PO et la trajectoire dudit aéronef A.

**Revendications**

1. Procédé pour déterminer automatiquement une trajectoire de capture (TC) d'une trajectoire de vol (TO) pour un aéronef (A), ladite trajectoire de vol (TO) comportant au moins une trajectoire latérale (TL) munie au moins d'une pluralité de tronçons rectilignes (2), ladite trajectoire de capture (TC) comportant successivement une phase initiale (PH1) représentant une rotation en arc de cercle (6), une phase de transition comportant éventuellement un segment rectiligne (7) et une phase terminale de capture (PH3) représentant une rotation, ladite trajectoire de capture (TC) étant une trajectoire de capture latérale qui est formée de manière à permettre à l'aéronef (A) de rejoindre latéralement un tronçon rectiligne particulier (2) de la trajectoire latérale (TL) de ladite trajectoire de vol (TO), et dont :

   - la phase initiale (PH1) débute à la position actuelle (PO) de l'aéronef (A) et présente un sens de rotation qui permet de minimiser la durée de la phase de capture ;
   - la phase de transition (PH2) comporte un segment rectiligne (7) présentant un angle de capture (α) par rapport audit tronçon rectiligne particulier (2), si des premières conditions sont vérifiées ; et
   - la phase terminale de capture (PH3) représente une rotation permettant à l'aéronef de rejoindre ledit tronçon rectiligne particulier (2) avec une route prédéterminée,

   **caractérisé en ce que** ledit sens de rotation dépend :

   - d'une distance d représentant la distance maximale lors de la phase initiale (PH1) par rapport audit tronçon rectiligne particulier (2) ;
   - du rayon R de l'arc de cercle (6) formant ladite phase initiale (PH1) ;
   - d'une erreur de route TKAE entre la route actuelle (TRK1) de l'aéronef (A) et celle (TRK2) permettant de suivre ledit tronçon rectiligne particulier (2) ; et
   - du côté, par rapport à la trajectoire latérale (TL) de la trajectoire de vol (TO), duquel vole l'aéronef (A), en regardant dans le sens de vol (E) défini pour suivre ladite trajectoire latérale (TL).

2. Procédé selon la revendication 1,
   **caractérisé en ce que** ladite trajectoire de capture (TC) est définie de manière à permettre une durée de capture minimale.

3. Procédé selon l'une des revendications 1 et 2,
   **caractérisé en ce que** l'on détermine le rayon (R) de l'arc de cercle (6) formant ladite phase initiale (PH1), à partir d'un facteur de charge maximal admissible et d'une vitesse de consigne de l'aéronef (A).

4. Procédé selon l'une des revendications 1 à 3,
   **caractérisé en ce que** ledit sens de rotation correspond :

   A/ lorsque d ≥ 2R :

   a) lorsque l'aéronef (A) vole du côté droit :

   1) TKAE ∈ ] -180° ; -(180° - α) [, à une rotation vers la droite ;
   2) TKAE ∈ [ -(180° - α) ; α[, à une rotation vers la gauche ;
   3) TKAE = α, -à aucune rotation ; et
   4) TKAE ∈ ] α ; 180 °], à une rotation vers la droite ;
   α représentant ledit angle de capture ;

b) lorsque l'aéronef (A) vole du côté gauche :

    1)TKAE $\in$ ] -180° ; -$\alpha$ [, à une rotation vers la gauche ;
    2) TKAE = -$\alpha$, à aucune rotation ;
    3) TKAE $\in$ ]-$\alpha$ ; 180° - $\alpha$], à une rotation vers la droite ; et
    4) TKAE $\in$ [180° -$\alpha$ ; 180°], à une rotation vers la gauche ;

B/ lorsque dmin $\leq$ d < 2R, avec dmin = 2Rcos$\alpha$ :

    a) lorsque l'aéronef (A) vole du côté droit :

        1) TKAE $\in$ ] -180° ; -(180° - ($\alpha$-$\beta$)) ], à une rotation vers la droite ;
        2) TKAE $\in$ ] -(1180° - ($\alpha$-$\beta$)) ; 0°], à une rotation vers la gauche ;
        3) TKAE $\in$ [0° ; 180° - ($\alpha$-$\beta$)], à une rotation vers la gauche ;
        4) TKAE $\in$ ] 180° - ($\alpha$-$\beta$) ; 180°], à une rotation vers la droite ; et
        5) TKAE = -($\alpha$-$\beta$), à aucune rotation ;
        $\beta$ représentant un angle particulier ;

    b) lorsque l'aéronef (A) vole du côté gauche :

        1) TKAE $\in$] -180° ; -($\alpha$-$\beta$) [, à une rotation vers la gauche ;
        2) TKAE = -($\alpha$-$\beta$), à aucune rotation ;
        3) TKAE $\in$ ] -($\alpha$-$\beta$) ; 0° ], à une rotation vers la droite ;
        4) TKAE $\in$ [0° ; 180° -($\alpha$-$\beta$)], à une rotation vers la droite ; et
        5) TKAE $\in$ ] 180° -($\alpha$-$\beta$) ; 180° ], à une rotation vers la gauche ;

C/ lorsque d < dmin et l'aéronef (A) vole du côté droit ou du côté gauche :

    1) TKAE $\in$ [ 0° ; 180° ], à une rotation vers la droite ; et
    2) TKAE $\in$ ] -180° ; 0° ], à une rotation vers la gauche.

**5.** Procédé selon l'une quelconque des revendications précédentes, **caractérisé en ce que** ledit angle de capture ($\alpha$) présente une valeur prédéterminée, qui est modifiable par un opérateur.

**6.** Procédé selon l'une quelconque des revendications précédentes, **caractérisé en ce que** lesdites premières conditions sont vérifiées lorsqu'une distance d représentant la distance maximale lors de la phase initiale (PH1) par rapport audit tronçon rectiligne particulier (2), vérifie l'une des relations suivantes :

    a) d $\geq$ 2R, R étant le rayon de l'arc de cercle (6) formant ladite phase initiale (PH1) ;
    b) d $\leq$ dmin, avec dmin = 2Rcos$\alpha$, $\alpha$ représentant ledit angle de capture.

**7.** Procédé selon l'une quelconque des revendications précédentes, **caractérisé en ce que**, si lesdites premières conditions ne sont pas vérifiées, ladite phase de transition (PH2) correspond à un point de jonction desdites phases initiale et terminale (PH1, PH3).

**8.** Procédé selon l'une quelconque des revendications précédentes, **caractérisé en ce que** ladite route prédéterminée correspond à la route (TRK2) permettant de suivre ledit tronçon rectiligne particulier (2) de la trajectoire latérale (TL).

**9.** Procédé selon l'une quelconque des revendications précédentes, **caractérisé en ce que** la phase terminale de capture (PH3) représente une rotation en arc de cercle (8), dont le rayon (R) est déterminé à partir d'un facteur de charge maximal admissible et d'une vitesse de consigne de l'aéronef (A).

**10.** Dispositif pour déterminer automatiquement une trajectoire de capture (TC) d'une trajectoire de vol (TO) pour un aéronef (A), ladite trajectoire de vol (TO) comportant au moins une trajectoire latérale (TL) munie au moins d'une pluralité de tronçons rectilignes (2), ledit dispositif comportant des moyens (4) pour former ladite trajectoire de capture (TC) de manière à obtenir une trajectoire qui permet à l'aéronef (A) de rejoindre latéralement un tronçon rectiligne particulier (2) de ladite trajectoire de vol (TO), et qui comporte, successivement :

    - une phase initiale (PH1) représentant une rotation en arc de cercle (6) débutant à la position actuelle (PO) de l'aéronef (A), et présentant un sens de rotation qui permet de minimiser la durée de la phase de capture ;
    - une phase de transition (PH2) comportant, si des premières conditions sont vérifiées, un segment rectiligne (7) présentant un angle de capture ($\alpha$) par rapport audit tronçon rectiligne particulier (2) ; et
    - une phase terminale de capture (PH3) représentant une rotation permettant à l'aéronef (A) de rejoindre ledit tronçon rectiligne particulier (2) avec une route prédéterminée,

**caractérisé en ce que** lesdits moyens (4) pour former ladite trajectoire de capture (TC), comportent des moyens pour déterminer un sens de rotation dépendant :

    - d'une distance d représentant la distance maximale lors de la phase initiale (PH1) par rapport audit tronçon rectiligne particulier (2) ;
- du rayon R de l'arc de cercle (6) formant ladite phase initiale (PH1) ;
- d'une erreur de route TKAE entre la route actuelle (TRK1) de l'aéronef (A) et celle (TRK2) permettant de suivre ledit tronçon rectiligne particulier (2) ; et
- du côté, par rapport à la trajectoire latérale (TL) de la trajectoire de vol (TO), duquel vole l'aéronef (A), en regardant dans le sens de vol (E) défini pour suivre ladite trajectoire latérale (TL).

**11.** Méthode de guidage d'un aéronef (A) qui comporte une trajectoire de vol (TO) planifiée comprenant au moins une trajectoire latérale (TL) munie au moins d'une pluralité de tronçons rectilignes (2), **caractérisée en ce que** :

a) au cours d'un vol de l'aéronef (A), lorsque l'aéronef (A) n'est pas guidé le long de ladite trajectoire de vol (TO) planifiée, en permanence :

a1) on met en oeuvre un procédé tel que celui spécifié sous l'une quelconque des revendications 1 à 9, pour déterminer automatiquement une trajectoire de capture (TC) permettant à l'aéronef (A) de rejoindre latéralement un tronçon rectiligne particulier (2) de la trajectoire latérale (TL) de ladite trajectoire de vol (TO) planifiée ; et
a2) on présente ladite trajectoire de capture (TC) à un pilote de l'aéronef (A) ; et

b) lorsqu'un pilote de l'aéronef (A) arme un mode de navigation destiné à guider de façon automatique l'aéronef (A) latéralement le long de ladite trajectoire de vol (TO) planifiée :

b1) si l'aéronef (A) ne se trouve pas sur ladite trajectoire de vol (TO) planifiée, on guide de façon automatique l'aéronef (A) latéralement le long de ladite trajectoire de capture (TC) pour capturer ladite trajectoire de vol (TO) planifiée ; et
b2) dès que l'aéronef (A) se trouve sur ladite trajectoire de vol (TO) p!a-nifiée, on le guide de façon automatique à l'aide dudit mode de navigation latéralement le long de ladite trajectoire de vol (TO) planifiée.

**12.** Méthode selon la revendication 11, **caractérisée en ce qu'**à l'étape b1), l'aéronef (A) ne se trouve pas sur ladite trajectoire de vol (TO) planifiée, lorsque la distance latérale entre la position actuelle (PO) de l'aéronef (A) et la trajectoire latérale (TL) de la trajectoire de vol (TO), est supérieure à une distance prédéterminée.

**13.** Système de guidage d'un aéronef (A), comportant un moyen de guidage (14) susceptible de mettre en oeuvre un mode de navigation destiné à guider de façon automatique l'aéronef (A) latéralement le long d'une trajectoire de vol (TO) planifiée, **caractérisé :**

- **en ce qu'**il comporte de plus :

. un dispositif (1) tel que celui spécifié sous la revendication 10, pour déterminer automatiquement une trajectoire de capture (TC) permettant le cas échéant à l'aéronef (A) de rejoindre latéralement un tronçon rectiligne particulier (2) de la trajectoire latérale (TL) de ladite trajectoire de vol (TO) planifiée ; et
. des moyens (19) pour présenter ladite trajectoire de capture (TC) à un pilote de l'aéronef (A) ; et

- **en ce que** ledit moyen de guidage (14) est formé de manière à guider de façon automatique l'aéronef (A), dès qu'il est armé :

latéralement le long de ladite trajectoire de capture (TC) pour capturer ladite trajectoire de vol (TO) planifiée, si l'aéronef (A) ne se trouve pas sur ladite trajectoire de vol (TO) planifiée ; et
. latéralement le long de ladite trajectoire de vol (TO) planifiée à l'aide dudit mode de navigation, dès que ledit aéronef (A) se trouve sur ladite trajectoire de vol (TO) planifiée.

**14.** Aéronef,
**caractérisé en ce qu'**il comporte un dispositif (1) tel que celui spécifié sous la revendication 10.

**15.** Aéronef,
**caractérisé en ce qu'**il comporte un système de guidage (SG) tel que celui spécifié sous la revendication 13.

**Claims**

**1.** A method for automatically determining a capture trajectory (TC) of a flight trajectory (TO) for an aircraft (A), said flight trajectory (TO) comprising at least one lateral trajectory (TL) furnished at least with a plurality of rectilinear stretches (2), said capture trajectory (TC) comprising successively an initial phase (PH1) representing a circular arc rotation (6), a transition phase possibly comprising a rectilinear segment (7) and a terminal capture phase (PH3) representing a rotation, said capture trajectory (TC) being a lateral capture trajectory which is formed in such a way as to allow the aircraft (A) to join up laterally with a particular rectilinear stretch (2) of the lateral trajectory (TL) of said flight trajectory (TO), and of which:

- the initial phase (PH1) starts at the current position (PO) of the aircraft (A) and exhibits a direction of rotation which makes it possible to minimize the duration of the capture phase;
- the transition phase (PH2) comprises a rectilinear segment (7) exhibiting an angle of capture ($\alpha$) with respect to said particular rectilinear stretch (2), if first conditions are satisfied; and
- the terminal capture phase (PH3) represents a rotation allowing the aircraft to join up with said particular rectilinear stretch (2) with a predetermined course,

**characterized in that** said direction of rotation depends:

- on a distance $\underline{d}$ representing the maximum distance during the initial phase (PH1) with respect to said particular rectilinear stretch (2);
- on the radius R of the circular arc (6) forming said initial phase (PH1);
- on an error of course TKAE between the current course (TRK1) of the aircraft (A) and that (TRK2) making it possible to follow said particular rectilinear stretch (2); and
- on the side, with respect to the lateral trajectory (TL) of the flight trajectory (TO), on which the aircraft (A) is flying, when looking in the direction of flight (E) defined to follow said lateral trajectory (TL).

2. The method as claimed in claim 1,
**characterized in that** said capture trajectory (TC) is defined in such a way as to allow a minimum capture duration.

3. The method as claimed in one of claims 1 and 2, **characterized in that** the radius (R) of the circular arc (6) forming said initial phase (PH1) is determined on the basis of a maximum allowable load factor and of a preset speed of the aircraft (A).

4. The method as claimed in one of claims 1 to 3, **characterized in that** said direction of rotation corresponds:

A/ when $d \geq 2R$:

a) when the aircraft (A) is flying on the right side:

1) TKAE $\in$ ] -180°; - (180° - $\alpha$) [, to a rightward rotation;
2) TKAE $\in$ [ -180° - $\alpha$); $\alpha$[, to a leftward

rotation;
3) TKAE = $\alpha$, to no rotation; and
4) TKAE $\in$ ] $\alpha$; 180°], to a rightward rotation;
$\alpha$ representing said angle of capture;

b) when the aircraft (A) is flying on the left side:

1) TKAE $\in$] -180°; - $\alpha$[, to a leftward rotation;
2) TKAE = -$\alpha$, to no rotation;
3) TKAE $\in$ ] -$\alpha$; 180° - $\alpha$], to a rightward rotation; and
4) TKAE $\in$ [180° -$\alpha$; 180°], to a leftward rotation;

B/ when dmin $\leq$ d < 2R, with dmin = 2Rcos$\alpha$:

a) when the aircraft (A) is flying on the right side:

1) TKAE $\in$] -180°; -(180° - ($\alpha$-$\beta$))], to a rightward rotation;
2) TKAE $\in$] - (180° - ($\alpha$-$\beta$)); 0°], to a leftward rotation;
3) TKAE $\in$ [0°; 180° - ($\alpha$-$\beta$)], to a leftward rotation;
4) TKAE $\in$] 180° - ($\alpha$-$\beta$) ; 180°], to a rightward rotation; and
5) TKAE = -($\alpha$-$\beta$), to no rotation;
$\beta$ representing a particular angle;

b) when the aircraft (A) is flying on the left side:

1) TKAE $\in$ ] -180°; - ($\alpha$-$\beta$) [, to a leftward rotation;
2) TKAE = -($\alpha$-$\beta$), to no rotation;
3) TKAE $\in$ ] -($\alpha$-$\beta$); 0°], to a rightward rotation;
4) TKAE $\in$ [0°; 180° -($\alpha$-$\beta$)], to a rightward rotation; and
5) TKAE $\in$ ] 180° -($\alpha$-$\beta$); 180°], to a leftward rotation;

C/ when d < dmin and the aircraft (A) is flying on the right side or on the left side:

1) TKAE $\in$ [0°; 180°], to a rightward rotation; and
2) TKAE $\in$ ] -180°; 0°], to a leftward rotation.

5. The method as claimed in any one of the preceding claims,
**characterized in that** said angle of capture ($\alpha$) exhibits a predetermined value, which is modifiable by an operator.

**6.** The method as claimed in any one of the preceding claims,
**characterized in that** said first conditions are satisfied when a distance $\underline{d}$ representing the maximum distance during the initial phase (PH1) with respect to said particular rectilinear stretch (2) satisfies one of the following relations:

a) $d \geq 2R$, R being the radius of the circular arc (6) forming said initial phase (PH1);
b) $d \leq dmin$, with $dmin = 2R\cos\alpha$, $\alpha$ representing said angle of capture.

**7.** The method as claimed in any one of the preceding claims,
**characterized in that**, if said first conditions are not satisfied, said transition phase (PH2) corresponds to a point of joining of said initial and terminal phases (PH1, PH3).

**8.** The method as claimed in any one of the preceding claims,
**characterized in that** said predetermined course corresponds to the course (TRK2) making it possible to follow said particular rectilinear stretch (2) of the lateral trajectory (TL).

**9.** The method as claimed in any one of the preceding claims,
**characterized in that** the terminal capture phase (PH3) represents a circular arc rotation (8), whose radius (R) is determined on the basis of a maximum allowable load factor and of a preset speed of the aircraft (A).

**10.** A device for automatically determining a capture trajectory (TC) of a flight trajectory (TO) for an aircraft (A), said flight trajectory (TO) comprising at least one lateral trajectory (TL) furnished at least with a plurality of rectilinear stretches (2), said device comprising means (4) for forming said capture trajectory (TC) in such a way as to obtain a trajectory which allows the aircraft (A) to join up laterally with a particular rectilinear stretch (2) of said flight trajectory (TO), and which comprises, successively:

- an initial phase (PH1) representing a circular arc rotation (6), starting at the current position (PO) of the aircraft (A) and exhibiting a direction of rotation which makes it possible to minimize the duration of the capture phase;
- a transition phase (PH2) comprising a rectilinear segment (7) exhibiting an angle of capture ($\alpha$) with respect to said particular rectilinear stretch (2), if first conditions are satisfied; and
- a terminal capture phase (PH3) representing a rotation allowing the aircraft to join up with said particular rectilinear stretch (2) with a predetermined course,

**characterized in that** said means (4) for forming said capture trajectory (TC) comprise means for determining a direction of rotation depending:

- on a distance $\underline{d}$ representing the maximum distance during the initial phase (PH1) with respect to said particular rectilinear stretch (2);
- on the radius R of the circular arc (6) forming said initial phase (PH1);
- on an error of course TKAE between the current course (TRK1) of the aircraft (A) and that (TRK2) making it possible to follow said particular rectilinear stretch (2); and
- on the side, with respect to the lateral trajectory (TL) of the flight trajectory (TO), on which the aircraft (A) is flying, when looking in the direction of flight (E) defined to follow said lateral trajectory (TL).

**11.** A procedure for guiding an aircraft (A) which comprises a planned flight trajectory (TO) comprising at least one lateral trajectory (TL) furnished at least with a plurality of rectilinear stretches (2), **characterized in that**:

a) during a flight of the aircraft (A), when the aircraft (A) is not guided along said planned flight trajectory (TO), permanently:

a1) a method such as that specified under Claim 1 is implemented to automatically determine a capture trajectory (TC) allowing the aircraft (A) to join up laterally with a particular rectilinear stretch (2) of the lateral trajectory (TL) of said planned flight trajectory (TO);
a2) said capture trajectory (TC) is presented to a pilot of the aircraft (A);

b) when a pilot of the aircraft (A) enables a navigation mode intended to automatically guide the aircraft (A) laterally along said planned flight trajectory (TO):

b1) if the aircraft (A) does not lie on said planned flight trajectory (TO), the aircraft (A) is guided automatically laterally along said capture trajectory (TC) so as to capture said planned flight trajectory (TO); and
b2) as soon as the aircraft (A) lies on said planned flight trajectory (TO), it is guided automatically with the aid of said navigation mode laterally along said planned flight trajectory (TO).

**12.** The procedure as claimed in claim 11, **character-**

**ized in that** in step b1), the aircraft (A) does not lie on the planned flight trajectory (TO), when the lateral distance between the current position (PO) of the aircraft (A) and the lateral trajectory (TL) of the flight trajectory (TO) is greater than a predetermined distance.

13. A system for guiding an aircraft (A), comprising a means of guidance (14) able to implement a navigation mode intended to automatically guide the aircraft (A) laterally along a planned flight trajectory (TO), **characterized in that**:

- said system furthermore comprises:

• a device (1) such as that specified under claim 10, for automatically determining a capture trajectory (TC) allowing as appropriate the aircraft (A) to join up laterally with a particular rectilinear stretch (2) of the lateral trajectory (TL) of said planned flight trajectory (TO); and
• means (19) for presenting said capture trajectory (TC) to a pilot of the aircraft (A); and

- said guidance means (14) is formed in such a way as to automatically guide the aircraft (A), as soon as it is enabled:

• laterally along said capture trajectory (TC) so as to capture said planned flight trajectory (TO), if the aircraft (A) does not lie on said planned flight trajectory (TO); and
• laterally along said planned flight trajectory (TO) with the aid of said navigation mode, as soon as said aircraft (A) lies on said planned flight trajectory (TO).

14. An aircraft,
which comprises a device (1) such as that specified under claim 10.

15. An aircraft,
which comprises a guidance system (SG) such as that specified under claim 13.

**Patentansprüche**

1. Verfahren zum automatischen Bestimmen einer Erfassungsbahn (TC) einer Flugbahn (TO) für ein Luftfahrzeug (A), wobei die besagte Flugbahn (TO) zumindest eine seitliche Flugbahn (TL) umfasst, die zumindest mit einer Vielzahl von geradlinigen Abschnitten (2) versehen ist, und die besagte Erfassungsbahn (TC) nach und nach eine Anfangsphase (PH1) umfasst, die eine Rotation im Kreisbogen (6) darstellt, eine Übergangsphase, die eventuell ein geradliniges Segment (7) umfasst, und eine Endphase der Erfassung (PH3), die eine Rotation darstellt, wobei die besagte Erfassungsbahn (TC) eine seitliche Erfassungsbahn ist, die so geformt ist, dass es dem Luftfahrzeug (A) möglich ist, seitlich einen besonderen geradlinigen Abschnitt (2) der seitlichen Flugbahn (TL) der besagten Flugbahn (TO) zu treffen, und dessen:

- Anfangsphase (PH1) in der aktuellen Position (PO) des Luftfahrzeugs (A) beginnt, und eine Rotationsrichtung aufweist, die es ermöglicht, die Dauer der Erfassungsphase zu minimieren;
- Übergangsphase (PH2) ein geradliniges Segment (7) umfasst, das einen Erfassungswinkel ($\alpha$) in Bezug auf den besagten besonderen geradlinigen Abschnitt (2) aufweist, wenn erste Bedingungen überprüft worden sind; und
- Endphase der Erfassung (PH3) eine Rotation aufweist, mit der es dem Luftfahrzeug möglich ist, den besonderen geradlinigen Abschnitt (2) mit einer vorbestimmten Route zu treffen,

**dadurch gekennzeichnet, dass** die besagte Rotationsrichtung abhängt:

- von einem Abstand d, der den maximalen Abstand in der Anfangsphase (PH1) in Bezug auf den besagten besonderen geradlinigen Abschnitt (2) darstellt;
- von einem Radius R des Kreisbogens (6) der die besagte Anfangsphase (PH1) bildet;
- von einem Routenfehler TKAE zwischen der aktuellen Route (TRK1) des Luftfahrzeugs (A) und jener (TRK2), mit der der besagte besondere geradlinige Abschnitt (2) verfolgt werden kann; und
- von der Seite, in Bezug auf die seitliche Flugbahn (TL) der besagten Flugbahn (TO), auf der das Luftfahrzeug (A) fliegt, wenn man in die Flugrichtung (E) blickt, die definiert wird, um der besagten seitlichen Flugbahn (TL) zu folgen.

2. Verfahren nach Anspruch 1,
**dadurch gekennzeichnet, dass** die besagte Erfassungsbahn (TC) so definiert ist, dass eine minimale Erfassungsdauer möglich ist.

3. Verfahren nach einem der Ansprüche 1 und 2,
**dadurch gekennzeichnet, dass** man den Radius R der Kreisbahn (6), die die besagte Anfangsphase (PH1) bildet, ausgehend von einem höchstzulässigen Lastfaktor und einer Sollgeschwindigkeit des Luftfahrzeugs (A) bestimmt.

4. Verfahren nach einem der Ansprüche 1 bis 3,
**dadurch gekennzeichnet, dass** die besagte Rotationsrichtung entspricht:

A/ wenn d ≥ 2R:

   a) wenn das Luftfahrzeug (A) auf der rechten Seite fliegt:

      1) TKAE ∈ ] - 180°; - (180° - α) [, bei einer Rotation nach rechts;
      2) TKAE [-(180° - α); α[, bei einer Rotation nach links;
      3) TKAE = α, bei keiner Rotation; und
      4) TKAE ∈ ] α; 180°], bei einer Rotation nach rechts;
      wobei α den besagten Erfassungswinkel darstellt;

   b) wenn das Luftfahrzeug (A) auf der linken Seite fliegt:

      1) TKAE ∈ ] - 180°; - α) [, bei einer Rotation nach links;
      2) TKAE = - α, bei keiner Rotation;
      3) TKAE ∈ ] - α; 180° - α], bei einer Rotation nach rechts; und
      4) TKAE ∈ [180° - α; 180°], bei einer Rotation nach links;

B/ wenn dmin ≤ d < 2R, mit dmin = 2Rcosα:

   a) wenn das Luftfahrzeug (A) auf der rechten Seite fliegt:

      1 ) TKAE ∈ ] - 180°; -(180° - (α-β))]; bei einer Rotation nach rechts;
      2) TKAE ∈ ] -(180° - (α-β)); 0°], bei einer Rotation nach links;
      3) TKAE ∈ [0°; 180° - (α-β)], bei einer Rotation nach links;
      4) TKAE ∈ ] 180° - (a-β); 180°], einer Rotation nach rechts; und
      5) TKAE = -(α-β), bei keiner Rotation;
      wobei β einen Sonderwinkel darstellt;

   b) wenn das Luftfahrzeug (A) auf der linken Seite fliegt:

      1) TKAE ∈ ] - 180°; - (α-β))[, bei einer Rotation nach links;
      2) TKAE = - (α-β), bei keiner Rotation;
      3) TKAE ∈ ] - (α-β); 0°], bei einer Rotation nach rechts;
      4) TKAE ∈ [0°; 180° - (α-β)], einer Rotation nach rechts; und
      5) TKAE ∈ ] 180° - (α-β); 180°], bei einer Rotation nach links;

C/ wenn d < dmin und das Luftfahrzeug (A) auf der rechten Seite oder auf der linken Seite fliegt:

      1) TKAE ∈ [0°; 180°], bei einer Rotation nach rechts;
      und
      2) TKAE ∈ ] -180°; 0°], bei einer Rotation nach links.

**5.** Verfahren nach irgendeinem der vorherigen Ansprüche, **dadurch gekennzeichnet, dass** der besagte Erfassungswinkel (α) einen vorbestimmten Wert aufweist, der durch einen Operator verändert werden kann.

**6.** Verfahren nach irgendeinem der vorherigen Ansprüche, **dadurch gekennzeichnet, dass** die besagten ersten Bedingungen überprüft werden, wenn ein Abstand d, der den maximalen Abstand in der Anfangsphase (PH1) in Bezug auf den besagten besonderen geradlinigen Abschnitt (2) darstellt, eine der folgenden Verhältnisse überprüft:

   a) d ≥ 2R, wobei R der Radius des Kreisbogens (6) ist, der die Anfangsphase (PH1) bildet;
   b) d ≤ dmin, mit dmin = 2Rcosα, wobei α den besagten Erfassungswinkel darstellt.

**7.** Verfahren nach irgendeinem der vorherigen Ansprüche, **dadurch gekennzeichnet, dass** die besagte Übergangsphase (PH2), wenn die besagten ersten Bedingungen nicht überprüft werden, einem Verbindungspunkt der besagten Anfangs- und Endphasen (PH1, PH3) entspricht.

**8.** Verfahren nach irgendeinem der vorherigen Ansprüche, **dadurch gekennzeichnet, dass** die besagte vorbestimmte Route der Route (TRK2) entspricht, mit der der besagte besondere geradlinige Abschnitt (2) der seitlichen Flugbahn (TL) verfolgt werden kann.

**9.** Verfahren nach irgendeinem der vorherigen Ansprüche, **dadurch gekennzeichnet, dass** die Abschlussphase der Erfassung (PH3) eine Rotation im Kreisbogen (8) darstellt, deren Radius (R) ausgehend von einem höchstzulässigen Lastfaktor und einer Sollgeschwindigkeit des Luftfahrzeugs (A) bestimmt wird.

**10.** Vorrichtung zum automatischen Bestimmen einer Erfassungsbahn (TC) einer Flugbahn (TO) für ein Luftfahrzeug (A), wobei die besagte Flugbahn (TO) zumindest eine seitliche Flugbahn (TL) umfasst, die zumindest mit einer Vielzahl von geradlinigen Abschnitten (2) versehen ist, und die besagte Vorrichtung Mittel (4) zur Bildung der besagten Erfassungsbahn (TC) umfasst, sodass man eine Flugbahn erhält, die es dem Luftfahrzeug (A) möglich ist, seitlich einen besonderen geradlinigen Abschnitt (2) der besagten Flugbahn (TO) zu treffen, und die nach und nach folgendes umfasst:

- eine Anfangsphase (PH1), die eine Rotation im Kreisbogen (6) darstellt, die in der aktuellen Position (PO) des Luftfahrzeugs (A) beginnt, und eine Rotationsrichtung aufweist, die es ermöglicht, die Dauer der Erfassungsphase zu minimieren;
- eine Übergangsphase (PH2), die, wenn die ersten Bedingungen überprüft werden, ein geradliniges Segment (7) umfasst, das einen Erfassungswinkel ($\alpha$) in Bezug auf den besagten besonderen geradlinige Abschnitt (2) aufweist; und
- eine Endphase der Erfassung (PH3), die eine Rotation darstellt, mit der es dem Luftfahrzeug (A) möglich ist, den besonderen geradlinigen Abschnitt (2) mit einer vorbestimmten Route zu treffen,

**dadurch gekennzeichnet, dass** die besagten Mittel (4) zur Bildung der besagten Erfassungsbahn (TC) Mittel zur Bestimmung einer Rotationsrichtung umfassen, abhängig:

- von einem Abstand d, der den maximalen Abstand in der Anfangsphase (PH1) in Bezug auf den besagten besonderen geradlinigen Abschnitt (2) darstellt;
- von einem Radius R des Kreisbogens (6) der die besagte Anfangsphase (PH1) bildet;
- von einem Routenfehler TKAE zwischen der aktuellen Route (TRK1) des Luftfahrzeugs (A) und jener (TRK2), mit der der besagte besondere geradlinige Abschnitt (2) verfolgt werden kann; und
- von der Seite, in Bezug auf die seitliche Flugbahn (TL) der besagten Flugbahn (TO), auf der das Luftfahrzeug (A) fliegt, wenn man in die Flugrichtung (E) blickt, die definiert wird, um der besagten seitlichen Flugbahn (TL) zu folgen.

11. Methode zum Leiten eines Luftfahrzeugs (A), die eine geplante Flugbahn (TO) umfasst, die zumindest eine seitliche Flugbahn (TL) umfasst, mit zumindest einer Vielzahl von geradlinigen Abschnitten (2), **dadurch gekennzeichnet, dass**:

a) im Laufe eines Fluges des Luftfahrzeugs (A), wenn das Luftfahrzeug (A) nicht entlang der besagten geplanten Flugbahn (TO) geleitet wird, man permanent:

a1) ein Verfahren wie jenes anwendet, wie es in irgendeinem der Ansprüche 1 bis 9 spezifiziert wird, um automatisch eine Erfassungsbahn (TC) zu bestimmen, die es dem Luftfahrzeug (A) ermöglicht, seitlich einen besonderen geradlinigen Abschnitt (2) der seitlichen Flugbahn (TL) der besagten geplanten Flugbahn (TO) zu treffen; und
a2) die besagte Erfassungsbahn (TC) einem Piloten des Luftfahrzeugs (A) präsentiert; und

b) wenn ein Pilot des Luftfahrzeugs (A) einen Navigationsmodus aktiviert, der dazu bestimmt ist, das Luftfahrzeug (A) automatisch seitlich entlang der besagten geplanten Flugbahn (TO) zu leiten:

b1) wenn sich das Luftfahrzeug (A) nicht in der besagten geplanten Flugbahn (TO) befindet, man das Luftfahrzeug (A) automatisch seitlich entlang der besagten geplanten Erfassungsbahn (TC) leitet, um die besagte geplante Flugbahn (TO) zu erfassen; und
b2) sobald sich das Luftfahrzeug (A) in der besagten geplanten Flugbahn (TO) befindet, man es automatisch mithilfe des besagten Navigationsmodus seitlich entlang der besagten geplanten Flugbahn (TO) leitet.

12. Methode nach Anspruch 11,
**dadurch gekennzeichnet, dass** sich das Luftfahrzeug (A) im Schritt b1) nicht auf der geplanten Flugbahn (TO) befindet, wenn der seitliche Abstand zwischen der aktuellen Position (PO) des Luftfahrzeugs (A) und der seitlichen Flugbahn (TL) der Flugbahn (TO) größer ist, als ein vorbestimmter Abstand.

13. System zum Leiten eines Luftfahrzeuges (A), umfassend eine Leitvorrichtung (14) die imstande ist, einen Navigationsmodus anzuwenden, der dazu bestimmt ist, das Luftfahrzeug (A) automatisch seitlich entlang der besagten geplanten Flugbahn (TO) zu leiten,
**dadurch gekennzeichnet:**

- **dass** es darüber hinaus umfasst:

eine Vorrichtung (1), wie jene, die im Anspruch 10 spezifiziert ist, zur automatischen Bestimmung einer Erfassungsbahn (TC), die es dem Luftfahrzeug (A) gegebenenfalls ermöglicht, seitlich einen besonderen geradlinigen Abschnitt (2) der seitlichen Flugbahn (TL) der besagten geplanten Flugbahn (TO) zu treffen; und
Mittel (19) zum Präsentieren der besagten Erfassungsbahn (TC) für einen Piloten des Luftfahrzeugs (A); und

- **dass** die besagte Leitvorrichtung (14) so ausgebildet ist, dass sie das Luftfahrzeug (A) automatisch leitet, sobald sie aktiviert ist:

seitlich entlang der besagten Erfassungsbahn (TC) zum Erfassen der besagten geplanten Flugbahn (TO), wenn sich das Luftfahrzeug (A) nicht in der besagten geplanten Flugbahn (TO) befindet; und

seitlich entlang der besagten geplanten Flugbahn (TO) mithilfe des besagten Navigationsmodus, sobald sich das besagte Luftfahrzeug (A) in der besagten geplanten Flugbahn (TO) befindet.

14. Luftfahrzeug,
    **dadurch gekennzeichnet, dass** es eine Vorrichtung (1) wie jene umfasst, die im Anspruch 10 spezifiziert ist.

15. Luftfahrzeug,
    **dadurch gekennzeichnet, dass** es ein Leitsystem (SG) wie jenes umfasst, das im Anspruch 13 spezifiziert ist.

Fig. 1

EP 1 598 719 B1

Fig. 2

Fig. 3

Fig. 4

Fig. 5

Fig. 6

Fig. 7

Fig. 8

Fig. 9

EP 1 598 719 B1

Fig. 10

EP 1 598 719 B1

Fig. 11

EP 1 598 719 B1

**RÉFÉRENCES CITÉES DANS LA DESCRIPTION**

**Documents brevets cités dans la description**

- FR 2787895 A